# EUROPÄISCHE PATENTSCHRIFT

(11) **EP 3 922 510 B1**
(45) Veröffentlichungstag und Bekanntmachung des Hinweises auf die Patenterteilung: **15.03.2023**
(21) Anmeldenummer: 21178444.2
(22) Anmeldetag: 09.06.2021
(51) Int. Cl.: B60N 2/07

(54) **SCHIENENFÜHRUNG, SITZANORDNUNG UND FAHRZEUG**
RAIL GUIDE, SEAT ASSEMBLY AND VEHICLE
GUIDAGE DE RAIL, AGENCEMENT DE SIÈGE ET VÉHICULE

(30) Priorität: 09.06.2020 DE 102020115282
(43) Veröffentlichungstag der Anmeldung: 15.12.2021
(73) Patentinhaber: Aguti Produktentwicklung & Design GmbH, 88085 Langenargen (DE)
(72) Erfinder: Rogg, Christian, 88142 Wasserburg (DE)
(74) Vertreter: Otten, Roth, Dobler & Partner mbB Patentanwälte

(56) Entgegenhaltungen:
- WO-A1-03/093053
- WO-A2-2007/112071
- KR-B1- 101 071 591
- US-A- 4 068 887
- US-A1- 2018 370 388

## Beschreibung

### Stand der Technik

Im Inneren von Fahrzeugen lassen sich mit Hilfe einer Schienenführung bzw. einer Fahrzeug-Gleitschiene verschiedene Einbauten wie zum Beispiel eine Fahrzeug-Inneneinrichtung oder eine Fahrzeug-Sitzanordnung montieren.

Die Schienenführung ist beispielsweise an einem Fahrzeugboden integral vorhanden oder wird nachträglich im Fahrzeug eingebaut. Mit der Schienenführung lässt sich die Inneneinrichtung bzw. der Fahrzeugsitz in seiner Position verändern, durch ein Verschieben des eingebauten Gegenstandes in Längsrichtung der Schienenführung.

Wenn bei einem Fahrzeugsitz, der in der Regel an zwei parallelen Schienenführungen bzw. Gleitschienen aufgenommen ist, zum Beispiel ein integrierter Sicherheitsgurt vorgesehen ist, können vergleichsweise höhere Belastungen auf den Fahrzeugsitz und damit die beiden Gleitschienen wirken. Gegenüber der Verwendung von Standard-Schienenführungen müssen dann spezielle, höherbelastbare Schienenführungen verwendet werden, was nachteilig ist.

Bei Schienenführungen mit einem daran montierten Fahrzeugsitz mit integraler Sitzgurtanbindung müssen die Schienenführungen für mögliche Spitzenbelastungen bzw. Szenarien im Betrieb des Fahrzeugs wie einem Crashfall bzw. einem Unfallereignis des Fahrzeugs ausgelegt sein, also den dabei auftretenden relativ hohen Belastungen durch wirkende Kräfte und Momente in einem geforderten Maß standhalten. Die WO2007112071 zeigt eine Schienenführung mit einem Verstärkungselement im inneren Kanal der unteren Schiene.

### Aufgabe und Vorteile der Erfindung

Aufgabe der vorliegenden Erfindung ist es, eine Schienenführung der eingangs genannten Art im Hinblick auf wirtschaftliche und technische Gesichtspunkte vorteilhaft bereitzustellen, insbesondere im Hinblick auf eine Auslegung für vergleichsweise höhere mechanische Belastungen der Schienenführung.

Diese Aufgabe wird durch die unabhängigen Ansprüche gelöst.

Die abhängigen Ansprüche thematisieren zweckmäßige und vorteilhafte Ausgestaltungen der Erfindung.

Die Erfindung geht aus von einer Schienenführung für ein Fahrzeug, insbesondere von einer Fahrzeug-Gleitschiene, welche die Merkmale des Anspruchs 1 zeigt.

Für die Aufnahme eines Fahrzeugsitzes im Fahrzeug werden in der Regel zwei beabstandete zueinander parallele übereinstimmende Schienenführungen verwendet.

Die Aufnahmestruktur für die Befestigung der im Einbauzustand der Schienenführung im Fahrzeug von der Bewegungsschiene überdeckten Festschiene kann beispielsweise ein Teil des Fahrzeug-Unterbaus bzw. des Fahrzeugbodens sein.

Der Kern der Erfindung liegt darin, dass das Verstärkungsorgan ein separates Bauteil umfasst, das als stabförmiges Metallprofil ausgebildet ist.

Vorteilhaft kann damit eine ausreichende Verstärkung der Schienenführung auf einfache und wirtschaftliche Weise bereitgestellt werden. Dabei ist es vorteilhaft, dass die Festschiene und die Bewegungsschiene selbst vergleichsweise mechanisch weniger stabil ausgebildet sein können, was der Fall ist insbesondere bei Standard-Schienenführungen, die insbesondere wirtschaftlich vorteilhaft sind gegenüber Sonderlösungen von Schienen-Führungen.

Die Art und Weise des stabförmigen Metallprofils kann vorteilhaft in weiten Grenzen individuell aus einer Vielzahl zur Verfügung stehender unterschiedlicher Metallprofile ausgewählt werden. Das Metallprofil ist erfindungsgemäß ein Standard-Metallprofil wie im Querschnitt ein einfaches Vierkant- wie Rechteck- oder Quader-Profil, je nach gewünschter Form und/oder notwendigem Verstärkungsgrad der Schienenführung.

Ein bevorzugtes Rechteckprofil-Verstärkungsorgan weist im Querschnitt eine Höhe auf, die 60 bis 80 Prozent der Breite des Rechteckprofils beträgt.

Das stabförmige Metallprofil ist erfindungsgemäß aus einem Standardprofil wie einem Vierkantprofil gebildet, das zum Beispiel nur in seiner Länge anzupassen ist, ohne einen weiteren Bearbeitungsschritt, gegebenenfalls abgesehen von einer einfachen Durchbohrung für das Durchgreifen eines Befestigungsmittels. Das Verstärkungsorgan wird aus dem Standardprofil insbesondere ohne einen weiteren Formgebungsprozess zur Änderung oder Anpassung der Außenform oder Außenkontur hergestellt.

Das Verstärkungsprofil aus dem Standard-Profil hat gegenüber aufwändig herzustellenden Bauteilen den Vorteil, dass es kein Bauteil wie z. B. ein gebogenes Blechteil ist, das ausgehend vom Standard-Profil einer weiteren Verformung wie einer Biege- oder Umkantverformung unterzogen werden muss. Ein zum Beispiel umgebogenes Blechteil als Verstärkungsorgan würde ein aufgrund der nachträglich notwendigen Formgebung aus deinem flachen ebenen Blechstück gegenüber dem erfindungsgemäßen Metallprofil ein vergleichsweise aufwändig herzustellendes Bauteil darstellen

Auch ist es von Vorteil, dass als Ausgangsprodukt für die erfindungsgemäße Schienenführung eine vergleichsweise einfache Standard-Gleitschiene, die preisgünstig und universell als handelsübliches Produkt fertig zur Verfügung steht und mit dem z. B. nachträglich daran anbringbaren Verstärkungsorgan auf einfache Weise mechanisch verstärkend modifizierbar ist. Die Erfindung macht es möglich, nahezu jede beliebige Schienenführung vorzugsweise eine handelsübliche Standard-Schienenführung mit Festschiene und Bewegungsschiene, die für Fahrzeugsitze mit integriertem Gurtsystem eine zu geringe mechanische Stabilität aufweist, zu verwenden für solche Fahrzeugsitze mit integriertem Gurtsystem. Die Standard-Schienenführung ist unkompliziert und gezielt auf nachrüstbar bzw. verstärkbar mit dem Verstärkungsorgan bzw. dem StabMetallprofil. Die Nachrüstung erfolgt vorteilhaft insbesondere optimiert bzw. ideal abgestimmt auf den gewünschten Stabilitätsgrad der Schienenführung. Der Grad der Verstärkung bzw. der Modifizierung ist vorteilhaft durch die Auswahl des Verstärkungsorgans bestimmbar, insbesondere durch die Art bzw. das Material, die Form und/oder die Abmessungen des Verstärkungsorgans und/oder dessen Positionierung an der Schienenführung. Bevorzugt ist das Verstärkungsorgan an der Festschiene bzw. in einem offenen Innenvolumen eingesetzt untergebracht fixiert.

Auch ist dabei vorteilhaft, dass das Verstärkungsorgan ein universelles bzw. handelsübliches Produkt ist, da ein längliches Metallprofil bzw. Stabmetallprofil als Grundkonstruktionsbauteil für verschiedenste Anwendungen im Metallbau in weiten Variationen an Formen, Materialien und/oder Abmessungen auf dem Markt erhältlich ist. Dies ist ebenfalls technisch und wirtschaftlich vorteilhaft. Im einfachen Fall ist das Verstärkungsorgan ein einfaches handelsübliches Metallprofil wie eine Metall-Leiste bzw. Flach-Metall-Leiste.

Das Verstärkungsorgan ist vorzugsweise einheitlich bzw. gleichbleibend im Querschnitt über seine Länge ausgebildet, gegebenenfalls abgesehen von kurzen Abschnitten, die für die Anbringung mit Befestigungsmitteln ausgebildet sind. Die Länge des Verstärkungsorgans entspricht vorzugsweise zumindest nahezu der Länge der Festschiene. Das Verstärkungsorgan ist vorzugsweise ein Standardprodukt wie ein Strangprofil, zum Beispiel durch Ablängen bereitgestellt, wie ein Mehrkant- bzw. Vierkant-Profil mit zum Beispiel zumindest angenähert rechteckigem oder quadratischem Querschnitt. Das Verstärkungsorgan besteht aus einem Metallwerkstoff vorzugsweise aus einem legierten Stahlwerkstoff. Alternativ kann der Werkstoff ein anderer Werkstoff wie beispielsweise ein einfacher Eisen- oder ein Aluminiumwerkstoff sein.

Bevorzugt weist das Verstärkungsorgan über seine zumindest nahezu gesamte Erstreckung bzw. seine nahezu gesamte Länge, vorzugsweise über mindestens 80 Prozent seiner Länge, vorzugsweise über seine gesamte Länge eine einheitliche Außenform auf, vorzugsweise mit gleichbleibender Breite und/oder gleichbleibender Höhe. Das Verstärkungsorgan ist bevorzugt ein durchgehend gleichförmiges Vierkantprofil, mit durchgehend gleicher Höhe und durchgehend gleicher Breite. Davon unberührt sind zum Beispiel gegebenenfalls vorhandene einzelne Bohrungen im Verstärkungsprofil, die sich zum Beispiel in Höhenrichtung an einer oder mehreren Stellen des Verstärkungsprofils erstrecken.

Grundsätzlich kann das Verstärkungsorgan auch zwei oder mehr gestapelt aufeinander liegende Standard-Metallprofile umfassen bzw. aus diesen zusammengesetzt gebildet sein. Zum Beispiel können zwei identische, fluchtend aufeinander liegende Flachstahl-Leisten das Verstärkungsorgan bilden. Dies ist herstellungstechnisch wenig aufwändig.

Vorteilhaft ist das Verstärkungsorgan an der Festschiene angebracht. Vorzugsweise ist das Verstärkungsorgan ausschließlich mit der Festschiene in berührender Anlage zum Beispiel innenseitig an der Festschiene angebracht. Das Verstärkungsorgan nimmt vorzugsweise einen Bauraum an der Festschiene ein, der bei Nutzung als Teil einer Standard-Schienenführung ohnehin vorhanden bzw. freibleibend vorhanden ist. Es ist vorteilhaft kein zusätzlicher Bauraum an der Standard-Schienenführung zu schaffen zur Unterbringung des Verstärkungsorgans.

Vorteilhafterweise umfasst die Schienenführung eine Standard-Schienenführung mit einer Festschiene und einer Bewegungsschiene, an welcher das Verstärkungsorgan angebracht vorhanden ist.

Die Erfindung macht es möglich, auf bisher notwendige teure Spezial-Schienenführungen verzichten zu können und stattdessen eine handelsübliche Standard-Schienenführung, die eine Festschiene und eine Bewegungsschiene aufweist, gezielt auf einfache Art und Weise nachzurüsten bzw. zu verstärken, insbesondere optimiert bzw. ideal abgestimmt auf den gewünschten Verstärkungsgrad der Standard-Schienenführung.

Die Ausrüstung der Standard-Schienenführung mit dem Verstärkungsorgan erfolgt vorzugsweise nachträglich, was vergleichsweise preisgünstig und unkompliziert gegenüber einer Sonderlösung ist.

Es ist überdies von Vorteil, dass das Metallprofil aus einem Vollmaterial gebildet ist. Damit wird eine besonders stabile Schienenführung bei geringem Platzbedarf für das Verstärkungsorgan bereitgestellt.

Das Verstärkungsprofil ist insbesondere bevorzugt nicht als Blechbiegeteil und/oder Hohlprofil ausgebildet.

Das Verstärkungsprofil weist über seine Längserstreckung eine vorzugsweise einheitliche Form auf bzw. ist einheitlich über die wesentliche oder die gesamte Länge des Verstärkungsprofils.

Gemäß einer vorteilhaften Modifikation der Erfindung ist das Metallprofil ein Flachmaterial. Ein Flachmaterial ist kompakt an der Schienenführung unterbringbar. Vorzugsweise ist die Höhe der erfindungsgemäßen Schienenführung unverändert gegenüber einer Standard-Schienenführung ohne Verstärkungsorgan, weil das flache Metallprofil flach bauend innerhalb einem ohnehin vorhandenen Innen-Hohlvolumen der Standard-Schienenführung unterbringbar ist Die verglichen reduzierte Höhe des als Flachmaterial gebildeten Verstärkungsprofils bezogen auf den Einbauzustand der Schienenführung bzw. des Verstärkungsprofils macht diese vorteilhafte kompakte im Wesentlichen gesamte oder vollständige Unterbringung des Verstärkungsprofils im Inneren der Schienenführung problemlos möglich.

Die Höhe des Verstärkungsprofils ist vorzugsweise geringer als eine Höhe eines freien Innenvolumens der Schienenführung ohne das Verstärkungsprofils, vorzugsweise geringer als eine Höhe eines freien Hohlvolumens der Festschiene, wie eines kanalförmigen Innenvolumens der Festschiene, oberhalb eines Festschienen-Bodens. Das Innenvolumen ist z. B. in der Höhe zwischen einem Boden bis zu einer Oberkante der Festschiene bzw. von Seitenwänden und in der Breite zwischen gegenüberliegenden Seitenwänden der Festschiene ausgebildet. Bezogen auf den Einbauzustand der Schienenführung und damit des daran vorhandenen Verstärkungsprofils ist die Höhe des Verstärkungsprofils geringer als die Breite des Verstärkungsprofils. Das Verstärkungsprofil ist vorzugsweise leistenförmig bzw. streifenförmig. Die Breite des Verstärkungsprofils entspricht in etwa der Breite des freien Innenvolumens der Festschiene bzw. der Breite eines vorzugsweise oben offenen zum Beispiel U-förmigen Innenkanals der Festschiene Der Innenkanal ist von Abschnitten der Festschiene und/oder der Bewegungsschiene umschlossen.

Ein anderer Vorteil ergibt sich, wenn Befestigungsmittel vorgesehen sind, mit welchen die Festschiene an der Aufnahmestruktur fixierbar ist, wobei das Verstärkungsorgan mit den Befestigungsmitteln an der Festschiene angebracht ist. Damit wird eine vereinfachte Lösung bereitgestellt. Insbesondere sind zu den ohnehin vorhandenen Befestigungsmittel keine zusätzlichen Befestigungsmittel zur Befestigung des Verstärkungsorgans an der Standard-Schienenführung notwendig. Es werden vorteilhaft dazu die ohnehin verwendeten Befestigungsmittel für die Anbringung der Festschiene und damit der Schienenführung an der Aufnahmestruktur genutzt zur Anbringung des Verstärkungsorgans an der Standard-Schienenführung, welche mit dem Verstärkungsorgan zur erfindungsgemäßen Schienenführung nachgerüstet ist.

Es müssen am Standard-Metallprofil für die Fertigstellung des Verstärkungsorgans gegebenenfalls lediglich zum Beispiel Bohrungen zum Durchgreifen der Befestigungsmittel vorgesehen werden.

Alternativ können Bohrungen im Verstärkungsorgan entfallen, wenn das Verstärkungsorgan zum Beispiel an der Festschiene der Standard-Schienenführung angeschweißt wird.

Die Befestigungsmittel, mit denen das Verstärkungsorgan angebracht ist, sind vorzugsweise Schraubmittel. Die Befestigungsmittel greifen insbesondere durch das Verstärkungsorgan und durch beispielsweise einen Boden der Festschiene bis in die Aufnahmestruktur wie den Fahrzeugboden.

Gemäß einer vorteilhaften Abwandlung der vorliegenden Erfindung erstreckt sich das Verstärkungsorgan über die wesentliche Länge der Festschiene, vorzugsweise über mindestens 70 Prozent der Länge der Festschiene, vorzugsweise über mindestens 80 Prozent der Länge der Festschiene, vorzugsweise über mindestens 90 Prozent der Länge der Festschiene, vorzugsweise über die gesamte Länge der Festschiene erstreckt.

Das Verstärkungsorgan kann bündig an einem Längsende der Festschiene und/oder an beiden Längsenden der Festschiene bündig enden. Auch denkbar ist, dass das Verstärkungsorgan etwas über ein Längsende der Festschiene und/oder an beiden Längsenden der Festschiene übersteht.

Es ist vorteilhaft, wenn die Festschiene einen im Einbauzustand der Schienenführung nach oben offenen Innenkanal aufweist, wobei das Verstärkungsorgan innerhalb des Innenkanals untergebracht ist. Damit ist eine mechanisch besonders kompakte Unterbringung des Verstärkungsorgans an der Festschiene und damit der Schienenführung erreicht. Außerdem wirkt das Verstärkungsorgan besonders stabilisierend, weil das Verstärkungsorgan insbesondere durch Anlage an einem Boden und zwei gegenüberliegenden Seitenwänden der Festschiene aussteifend auf die Festschiene und damit die Schienenführung wirkt. Mit dem Verstärkungsorgan ist die Schienenführung gegen eine Verformung der Festschiene bzw. der Schienenführung durch Verbiegen und/oder aufgrund Torsion versteift.

Vorzugsweise ist das Verstärkungsorgan abgestimmt auf die Breite und/oder Höhe des Innenkanals ausgebildet, so dass das Verstärkungsorgan passgenau bzw. mit geringem Spiel in den Innenkanal passt und diesen in der Breite vorzugsweise nahezu vollständig und in der Höhe bis vorzugsweise etwa über die halbe Höhe ausfüllt.

Der Innenkanal der Festschiene bildet sich in Längsrichtung der Festschiene seitlich begrenzt durch sich erstreckenden gegenüberliegenden im Einbauzustand der Schienenführung hochstehenden Schienen-Längswänden und einem horizontalen Schienen-Boden. Die Schienen-Längswände und der Schienen-Boden grenzen an den im Einbauzustand der Schienenführung nach oben offenen Innenkanal der Festschiene an.

Der Schienen-Boden verbindet unten die gegenüberliegenden Schienen-Längswände miteinander. Mit dem Innenkanal weist die Festschiene einen im Querschnitt kanalförmig bzw. U-förmig ausgebildeten Aufnahmebereich für die kompakte und stabilisierende Unterbringung des Verstärkungsorgans auf.

Das Verstärkungsorgan stützt sich vorteilhaft auf einem Schienen-Boden der Festschiene ab. Das Verstärkungsorgan liegt mit seiner Unterseite vorzugsweise flächig auf dem Schienen-Boden. Dadurch wird bei entsprechender Länge und Breite des Verstärkungsorgans und damit dessen Unterseite der Schienen-Boden vorzugsweise größtenteils oder vollständig abgedeckt und damit dieser zwischen dem Verstärkungsorgan und der Aufnahmestruktur mechanisch stabilisiert gegen eine Verformung durch vom z. B. Fahrzeugsitz über die Bewegungsschiene auf die Festschiene wirkende Kräfte und Momente. Die Ableitung von Kräften und Momenten über die Festschiene in die Aufnahmestruktur wird ohne oder ohne kritische Verformung der Schienenführung bzw. der Festschiene im zum Beispiel Crashfall des betreffenden Fahrzeugs ermöglicht.

Eine andere vorteilhafte Ausbildung der Erfindung basiert darauf, dass das Verstärkungsorgan und die Bodenschiene aufeinander abgestimmte Durchgangsöffnungen aufweisen, wobei Befestigungsmittel durch die Durchgangsöffnung in dem Verstärkungsorgan und der Festschiene greifen, so dass die Schienenführung mit den Befestigungsmitteln an der Aufnahmestruktur fixierbar ist. Damit lässt sich das Verstärkungsorgan effektiv und ohne zusätzliche Befestigungsmittel an der Festschiene und damit an der Schienenführung befestigen.

Vorzugsweise ist die Festschiene und/oder die Bewegungsschiene als Blech-Kantprofil ausgebildet. Damit kann eine Standard-Schienenführung als Basis für die erfindungsgemäße Schienenführung verwendet werden, da Standard-Schienenführungen in aller Regel eine als Blech-Kantprofil gestaltete Fest- und eine solche Bewegungsschiene umfassen.

Zur sauberen Schiebebewegung der Bewegungsschiene an der Festschiene ist es vorteilhaft, wenn zwischen der Festschiene und der Bewegungsschiene Lagermittel zur verschieblichen Bewegung der Bewegungsschiene relativ zur Festschiene vorhanden sind. Vorzugsweise ist eine Wälzlageranordnung mit zum Beispiel an einem Lagerkäfig vorhandenen Kugel- und/oder Walzen-Wälzlagermittel vorgesehen zwischen der Fest- und der Bewegungsschiene.

Vorteilhaft ist es, wenn an der Bewegungsschiene vorbereitete Anbindungsabschnitte vorhanden sind, welche für eine Kopplung der Bewegungsschiene mit einer Fahrzeug-Inneneinrichtung und/oder mit einer Sitzanordnung in einem Fahrzeug ausgebildet sind. Damit ist die Kopplung praktikabel einrichtbar, mit Hilfe von zum Beispiel Schraubmitteln, die durch vorbereitete z. B. Innen-Gewindeabschnitte an der Bewegungsschiene greifen.

Die Erfindung erstreckt sich auch auf eine Fahrzeug-Inneneinrichtung und/oder auf eine Sitzanordnung in einem Fahrzeug mit einer Schienenführung nach einer der vorgenannten Modifikationen. Damit lassen sich die beschriebenen Vorteile bei der Fahrzeug-Inneneinrichtung oder der Sitzanordnung realisieren

Schließlich richtet sich die Erfindung auf ein Fahrzeug wie beispielsweise ein Wohnmobil oder eine Camping-Fahrzeug mit einer Fahrzeug-Inneneinrichtung und/oder einer Sitzanordnung in einem Fahrzeug gemäß der vordiskutierten Ausgestaltung.

### Figurenbeschreibung

Weitere Merkmale und Vorteile der Erfindung sind anhand eines in den Figuren stark schematisiert dargestellten Ausführungsbeispiels einer erfindungsgemäßen Schienenführung näher erläutert.

Im Einzelnen zeigt:
Fig. 1 eine perspektivische Ansicht schräg von oben auf eine Schienenführung, die an einer ausschnittsweise gezeigten Aufnahmestruktur angebracht ist und
Fig. 2 einen Stirnansicht der Anordnung gemäß Fig. 1.

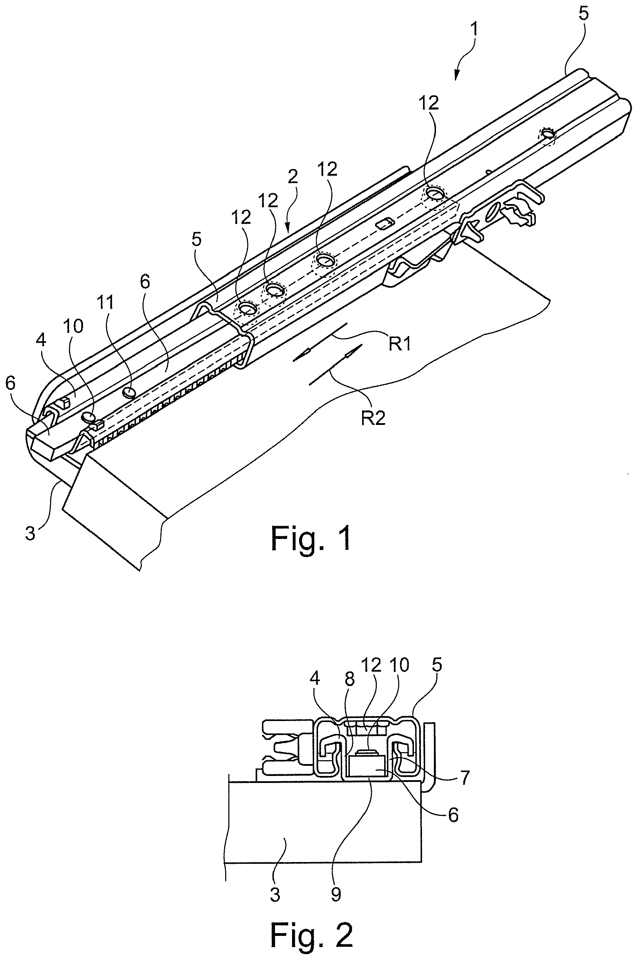

Fig. 1 zeigt eine erfindungsgemäße Schienenführung 1 für die Anbringung einer Sitzanordnung bzw. eines Fahrzeugsitzes in einem Fahrzeug. Die Schienenführung 1 ist als Fahrzeug-Gleitschiene 2 ausgebildet und an einer Aufnahmestruktur 3 des Fahrzeugs fixiert.

Die Schienenführung 1 umfasst eine im Einbauzustand gemäß Fig. 1 untere bzw. untenliegende Festschiene 4 und eine oberhalb der Festschiene 4 an der Festschiene 4 über z. B. Anschläge begrenzt verschieblich geführte Bewegungsschiene 5. Die Festschiene 4 ist an der Aufnahmestruktur 3 vorzugsweise lösbar befestigt. Die Bewegungsschiene 5 ist mit der nicht dargestellten Sitzanordnung koppelbar.

In der Regel ist die Sitzanordnung an zwei parallel zueinander an der Aufnahmestruktur 3 befestigten gleichen Schienenführungen 1 bzw. an einem Schienenführungspaar aufgenommen. In Fig. 1 ist demgemäß nur eine Schienenführung bzw die Schienenführung 1 eines Schienenführungspaars für die stabile Befestigung des nicht gezeigten Fahrzeugsitzes dargestellt. An der Bewegungsschiene 5 sind vorbereitete verstärkt gestaltete Schrauböffnungen 12 zur Befestigung des Fahrzeugsitzes an der Schienenführung 1 vorgesehen. Der Fahrzeugsitz ist mit den beiden Schienenführungen 1 in Richtung R1 und in Richtung R2 verschieblich an der Aufnahmestruktur 3 befestigt. In einer gewählten Verschiebeposition der Bewegungsschiene 5 an der Festschiene 4 ist der Fahrzeugsitz mittels der beiden Bewegungsschienen 5 arretierbar, indem die Bewegungsschienen 5 samt Fahrzeugsitz in einer von mehreren verschiedenen Positionen entlang der jeweiligen dazugehörigen Festschiene 4 daran verriegelbar ist. Hierfür ist beispielsweise eine manuell bedienbare für eine lösbare und wieder feststellbare Verriegelung bzw. Arretierung der Bewegungsschiene 5 an der Festschiene 4 vorgesehen.

Zwischen der Festschiene 4 und der Bewegungsschiene 5 sind zur sauberen, gleichmäßig kontrollierten Verschiebebewegung der Bewegungsschiene 5 relativ zur Festschiene 4 nicht näher dargestellte Lagermittel wie Wälzlagermittel vorgesehen.

Die Festschiene 4 und die Bewegungsschiene 5 sind als BlechBiegeteil aus jeweils einem streifenförmigen Ausgangsmaterial wie einem Blech gebildet, das mehrfach gebogen bzw. umgekantet ist zu der Festschiene 4 bzw. zu der Bewegungsschiene 5. Die Schienenführung 1 ist vorteilhaft aus einer vergleichsweise einfachen und preisgünstigen Standard-Schienenführung mit der Festschiene 4 und der Bewegungsschiene 5 herstellbar.

Zur mechanischen Verstärkung der Schienenführung 1 ist ein Verstärkungsorgan 6 der Schienenführung 1 vorgesehen. Das Verstärkungsorgan 6 ist an der Festschiene 4 oder der Bewegungsschiene 5 angebracht vorhanden, im gezeigten Ausführungsbeispiel vorteilhafterweise an der Festschiene 4 befestigt bzw. mit dieser fest aber lösbar verbunden.

Das Verstärkungsorgan 6 ist hier vorteilhaft in einem freien Hohlvolumen der Festschiene 4, wie einem kanalförmigen Innenraum bzw. -volumen der Festschiene 4 bzw. einem U-förmigen nach oben offenen Innenkanal der Festschiene 4 zwischen gegenüberliegenden vertikalen Seitenwänden 7, 8 und einem Boden 9 der Festschiene 4 aufgenommen.

Das Verstärkungsorgan 6 ist als Verstärkerleiste ausgestaltet und besteht vorzugsweise aus einem einfachen Vollmaterial wie einem Flachstahl mit einem hier beispielhaften RechteckQuerschnitt. Das Verstärkungsorgan 6 erstreckt sich vorzugsweise über die gesamte Länge der Festschiene 4 bzw. steht beispielhaft geringfügig beidseitig über die Längsenden der Festschiene 4 hinaus.

Die Fixierung des Verstärkungsorgans 6 an der Schienenführung 1 erfolgt vorteilhaft vorzugsweise über Schraubmittel mit Schrauben 10, 11, welche durch vorbereitete Schrauböffnungen im Verstärkungsorgan 6 greifen und durch entsprechende Öffnungen im Boden 9 der Festschiene 4. Die Schrauben 10, 11 sind vorteilhaft ohnehin vorhandene bzw. notwendige Befestigungsschrauben der Schienenführung 1, wenn diese ohne das Verstärkungsorgan 6 eine Standard-Schienenführung darstellt. Die Schrauben 10, 11, greifen im in den Figuren 1, 2 dargestellten fest angebrachten Zustand der Schienenführung 1 an der Aufnahmestruktur 3 fixierend in vorbereitete Gewindeöffnungen in der Aufnahmestruktur 3, die zum Beispiel eine Metallplatte mit Innengewindeöffnungen umfasst.

Mit dem Verstärkungsorgan 6 lassen sich Kräfte und/oder Momente, die auf die auch als Sitzgleitschiene bezeichnete Schienenführung 1 wirken, bei einem Crash bzw. Unfall des dazugehörigen Fahrzeugs, aufnehmen, ohne bzw. ohne kritische Verformung der Schienenführung 1. Dies ist insbesondere zum Beispiel bei Sitzanordnungen bzw. Fahrzeugsitzen mit integriertem Sicherheitsgurt von zentraler Bedeutung. Denn dann werden größere mechanische Belastungen über die Sitzanordnung in die Schienenführung 1 eingeleitet.

Mit dem Verstärkungsorgan 6 kann der restliche Teil der Schienenführung 1 vorteilhaft durch eine konventionelle bzw. Standard-Sitzschiene bzw. Schienenführung gebildet werden, wobei diese insbesondere nachträglich auf einfache Weise damit modifiziert und mechanisch verstärkt werden.

Auf eine teure Sonderlösung einer Schienenführung kann damit erfindungsgemäß verzichtet werden und stattdessen als Basis der Schienenführung 1 eine übliche Schienenführung herangezogen werden und diese einfach nachgerüstet bzw. mit dem Verstärkungsorgan 6 mechanisch versteift werden.

### Bezugszeichenliste

- 1: Schienenführung
- 2: Fahrzeug-Gleitschiene
- 3: Aufnahmestruktur
- 4: Festschiene
- 5: Bewegungsschiene
- 6: Verstärkungsorgan
- 7: Seitenwand
- 8: Seitenwand
- 9: Boden
- 10: Schraube
- 11: Schraube
- 12: Schrauböffnung

## Patentansprüche

1. Schienenführung (1) für ein Fahrzeug, insbesondere Fahrzeug-Gleitschiene, welche für die Anbringung einer Fahrzeug-Inneneinrichtung und/oder einer Sitzanordnung in einem Fahrzeug ausgebildet ist, wobei die Schienenführung (1) eine an einer Aufnahmestruktur (3) fixierbare Festschiene (4) und eine an der Festschiene (4) verschieblich geführte Bewegungsschiene (5) aufweist, wobei die Bewegungsschiene (5) mit der Inneneinrichtung und/oder der Sitzanordnung koppelbar ist, und wobei zur mechanischen Verstärkung der Schienenführung (1) ein Verstärkungsorgan (6) der Schienenführung (1) vorgesehen ist, das an der Festschiene (4) und/oder der Bewegungsschiene (5) angeordnet ist, wobei das Verstärkungsorgan (6) ein separates Bauteil umfasst, das als stabförmiges Metallprofil ausgebildet ist, wobei die Festschiene (4) einen im Einbauzustand der Schienenführung nach oben offenen Innenkanal aufweist, wobei das Verstärkungsorgan (6) innerhalb des Innenkanals untergebracht ist, wobei das stabförmige Metallprofil aus einem Standardprofil wie einem Vierkantprofil gebildet ist, **dadurch gekennzeichnet, dass** das Verstärkungsorgan (6) abgestimmt auf die Breite und auf die Höhe des Innenkanals ausgebildet ist, so dass das Verstärkungsorgan (6) passgenau oder mit geringem Spiel in den Innenkanal passt und diesen in der Breite und in der Höhe bis über die halbe Höhe ausfüllt.

2. Schienenführung nach Anspruch 1, **dadurch gekennzeichnet, dass** das Verstärkungsorgan (6) an der Festschiene (4) angebracht ist.

3. Schienenführung nach Anspruch 1 oder nach Anspruch 2, **dadurch gekennzeichnet, dass** die Schienenführung (1) eine Standard-Schienenführung mit einer Festschiene (4) und einer Bewegungsschiene (5) umfasst, an welcher das Verstärkungsorgan (6) angebracht vorhanden ist.

4. Schienenführung nach einem der vorhergehenden Ansprüche, **dadurch gekennzeichnet, dass** das Metallprofil aus einem Vollmaterial gebildet ist.

5. Schienenführung nach einem der vorhergehenden Ansprüche, **dadurch gekennzeichnet, dass** das Metallprofil ein Flachmaterial ist.

6. Schienenführung nach einem der vorhergehenden Ansprüche, **dadurch gekennzeichnet, dass** Befestigungsmittel (10, 11) vorgesehen sind, mit welchen die Festschiene (4) an der Aufnahmestruktur (3) fixierbar ist, wobei das Verstärkungsorgan (6) mit den Befestigungsmitteln (10, 11) an der Festschiene (4) angebracht ist.

7. Schienenführung nach einem der vorhergehenden Ansprüche, **dadurch gekennzeichnet, dass** sich das Verstärkungsorgan (6) über die wesentliche Länge der Festschiene (4) erstreckt, vorzugsweise über mindestens 70 Prozent der Länge der Festschiene (4), vorzugsweise über mindestens 80 Prozent der Länge der Festschiene (4), vorzugsweise über mindestens 90 Prozent der Länge der Festschiene (4), vorzugsweise über die gesamte Länge der Festschiene (4) erstreckt.

8. Schienenführung nach einem der vorhergehenden Ansprüche, **dadurch gekennzeichnet, dass** das Verstärkungsorgan (6) sich auf einem Schienen-Boden (9) der Festschiene (4) abstützt.

9. Schienenführung nach einem der vorhergehenden Ansprüche, **dadurch gekennzeichnet, dass** das Verstärkungsorgan (6) und die Festschiene (4) aufeinander abgestimmte Durchgangsöffnungen aufweisen, wobei Befestigungsmittel (10, 11) durch die Durchgangsöffnung in dem Verstärkungsorgan (6) und der Festschiene (4) greifen, so dass die Schienenführung (1) mit den Befestigungsmitteln (10, 11) an der Aufnahmestruktur (3) fixierbar ist.

10. Schienenführung nach einem der vorhergehenden Ansprüche, **dadurch gekennzeichnet, dass** die Festschiene (4) und/oder die Bewegungsschiene (5) als Blech-Kantprofil ausgebildet ist.

11. Schienenführung nach einem der vorhergehenden Ansprüche, **dadurch gekennzeichnet, dass** zwischen der Festschiene (4) und der Bewegungsschiene (5) Lagermittel zur verschieblichen Bewegung der Bewegungsschiene (5) relativ zur Festschiene (4) vorhanden sind.

12. Schienenführung nach einem der vorhergehenden Ansprüche, **dadurch gekennzeichnet, dass** an der Bewegungsschiene (5) vorbereitete Anbindungsabschnitte (12) vorhanden sind, welche für eine Kopplung der Bewegungsschiene (5) mit einer Fahrzeug-Inneneinrichtung und/oder mit einer Sitzanordnung in einem Fahrzeug ausgebildet sind.

13. Fahrzeug-Inneneinrichtung und/oder Sitzanordnung in einem Fahrzeug mit einer Schienenführung (1) nach einem der vorhergehenden Ansprüche.

14. Fahrzeug mit einer Fahrzeug-Inneneinrichtung und/oder einer Sitzanordnung in dem Fahrzeug nach Anspruch 13.

## Claims

1. Rail guide (1) for a vehicle, in particular vehicle slide rail, which is designed for the attachment of a vehicle interior fitting and/or a seat arrangement in a vehicle, wherein the rail guide (1) has a fixed rail (4) that is fixable to a receiving structure (3) and a movement rail (5) that is displaceably guided on the fixed rail (4), wherein the movement rail (5) is able to be coupled to the interior fitting and/or the seat arrangement, and wherein, to mechanically reinforce the rail guide (1), a reinforcement member (6) of the rail guide (1) is provided, said reinforcement member (6) being arranged on the fixed rail (4) and/or the movement rail (5), wherein the reinforcement member (6) comprises a separate component which is in the form of a bar-like metal profile, wherein the fixed rail (4) has an internal channel that is upwardly open in the installed state of the rail guide, wherein the reinforcement member (6) is accommodated within the internal channel, wherein the bar-like metal profile is formed from a standard profile such as a square profile, **characterized in that** the reinforcement member (6) is designed to match the width and the height of the internal channel such that the reinforcement member (6) fits in the internal channel exactly or with slight play and fills the latter in terms of width and height to over half the height.

2. Rail guide according to Claim 1, **characterized in that** the reinforcement member (6) is attached to the fixed rail (4).

3. Rail guide according to Claim 1 or according to Claim 2, **characterized in that** the rail guide (1) comprises a standard rail guide with a fixed rail (4) and a movement rail (5) to which the reinforcement member (6) is attached.

4. Rail guide according to any of the preceding claims, **characterized in that** the metal profile is formed from a solid material.

5. Rail guide according to any of the preceding claims, **characterized in that** the metal profile is a flat material.

6. Rail guide according to any of the preceding claims, **characterized in that** fastening means (10, 11) are provided, by which the fixed rail (4) is able to be fixed to the receiving structure (3), wherein the reinforcement member (6) is attached to the fixed rail (4) by the fastening means (10, 11).

7. Rail guide according to any of the preceding claims, **characterized in that** the reinforcement member (6) extends along most of the length of the fixed rail (4), preferably along at least 70 per cent of the length of the fixed rail (4), preferably along at least 80 per cent of the length of the fixed rail (4), preferably along at least 90 per cent of the length of the fixed rail (4), preferably along the entire length of the fixed rail (4).

8. Rail guide according to any of the preceding claims, **characterized in that** the reinforcement member (6) is supported on a rail base (9) of the fixed rail (4).

9. Rail guide according to any of the preceding claims, **characterized in that** the reinforcement member (6) and the fixed rail (4) have through-openings that match one another, wherein fastening means (10, 11) pass through the through-opening in the reinforcement member (6) and the fixed rail (4) such that the rail guide (1) is able to be fixed to the receiving structure (3) by the fastening means (10, 11).

10. Rail guide according to any of the preceding claims, **characterized in that** the fixed rail (4) and/or the movement rail (5) is in the form of a sheet-metal edge profile.

11. Rail guide according to any of the preceding claims, **characterized in that** bearing means for displaceably moving the movement rail (5) relative to the fixed rail (4) are present between the fixed rail (4) and the movement rail (5).

12. Rail guide according to any of the preceding claims, **characterized in that** attachment portions (12) provided on the movement rail (5) are present, which are designed for coupling the movement rail (5) to a vehicle interior fitting and/or to a seat arrangement in a vehicle.

13. Vehicle interior fitting and/or seat arrangement in a vehicle having a rail guide (1) according to any of the preceding claims.

14. Vehicle having a vehicle interior fitting and/or a seat arrangement in the vehicle according to Claim 13.

## Revendications

1. Glissière (1) pour un véhicule, notamment rail de glissement de véhicule, qui est configurée pour le montage d'un équipement intérieur de véhicule et/ou d'un agencement de siège dans un véhicule, la glissière (1) présentant un rail fixe (4) pouvant être fixé sur une structure de réception (3) et un rail mobile (5) guidé de manière coulissante sur le rail fixe (4), le rail mobile (5) pouvant être couplé à l'équipement intérieur et/ou à l'agencement de siège, et un organe de renforcement (6) de la glissière (1) étant prévu pour le renforcement mécanique de la glissière (1), lequel est agencé sur le rail fixe (4) et/ou le rail mobile (5), l'organe de renforcement (6) comprenant un composant séparé qui est configuré sous la forme d'un profilé métallique en forme de barre, le rail fixe (4) présentant un canal intérieur ouvert vers le haut à l'état monté de la glissière, l'organe de renforcement (6) étant logé à l'intérieur du canal intérieur, le profilé métallique en forme de barre étant formé d'un profilé standard tel qu'un profilé carré, **caractérisée en ce que** l'organe de renforcement (6) est configuré en fonction de la largeur et de la hauteur du canal intérieur, de telle sorte que l'organe de renforcement (6) s'adapte exactement ou avec un faible jeu dans le canal intérieur et remplit celui-ci en largeur et en hauteur jusqu'à la moitié de sa hauteur.

2. Glissière selon la revendication 1, **caractérisée en ce que** l'organe de renforcement (6) est monté sur le rail fixe (4).

3. Glissière selon la revendication 1 ou selon la revendication 2, **caractérisée en ce que** la glissière (1) comprend une glissière standard avec un rail fixe (4) et un rail mobile (5) sur lequel est monté l'organe de renforcement (6).

4. Glissière selon l'une quelconque des revendications précédentes, **caractérisée en ce que** le profilé métallique est formé d'un matériau plein.

5. Glissière selon l'une quelconque des revendications précédentes, **caractérisée en ce que** le profilé métallique est un matériau plat.

6. Glissière selon l'une quelconque des revendications précédentes, **caractérisée en ce que** des moyens de fixation (10, 11) sont prévus, avec lesquels le rail fixe (4) peut être fixé à la structure de réception (3), l'organe de renforcement (6) étant monté sur le rail fixe (4) avec les moyens de fixation (10, 11).

7. Glissière selon l'une quelconque des revendications précédentes, **caractérisée en ce que** l'organe de renforcement (6) s'étend sur la longueur essentielle du rail fixe (4), de préférence sur au moins 70 pour cent de la longueur du rail fixe (4), de préférence sur au moins 80 pour cent de la longueur du rail fixe (4), de préférence sur au moins 90 pour cent de la longueur du rail fixe (4), de préférence sur toute la longueur du rail fixe (4).

8. Glissière selon l'une quelconque des revendications précédentes, **caractérisée en ce que** l'organe de renforcement (6) s'appuie sur un fond de rail (9) du rail fixe (4).

9. Glissière selon l'une quelconque des revendications précédentes, **caractérisée en ce que** l'organe de renforcement (6) et le rail fixe (4) présentent des ouvertures de passage adaptées l'une à l'autre, des moyens de fixation (10, 11) s'engageant à travers l'ouverture de passage dans l'organe de renforcement (6) et le rail fixe (4), de telle sorte que la glissière (1) peut être fixée à la structure de réception (3) avec les moyens de fixation (10, 11).

10. Glissière selon l'une quelconque des revendications précédentes, **caractérisée en ce que** le rail fixe (4) et/ou le rail mobile (5) sont configurés sous forme de profilé plié en tôle.

11. Glissière selon l'une quelconque des revendications précédentes, **caractérisée en ce que** des moyens de palier pour le mouvement coulissant du rail mobile (5) par rapport au rail fixe (4) sont présents entre le rail fixe (4) et le rail mobile (5).

12. Glissière selon l'une quelconque des revendications précédentes, **caractérisée en ce que** des sections de liaison (12) préparées sont présentes sur le rail mobile (5), lesquelles sont configurées pour un couplage du rail mobile (5) avec un équipement intérieur de véhicule et/ou avec un agencement de siège dans un véhicule.

13. Aménagement intérieur de véhicule et/ou agencement de siège dans un véhicule avec une glissière (1) selon l'une quelconque des revendications précédentes.

14. Véhicule avec un équipement intérieur de véhicule et/ou un agencement de siège dans le véhicule selon la revendication 13.
